(19)

Europäisches Patentamt

European Patent Office

Office européen des brevets

(11)  **EP 3 677 950 B1**

(12)  **EUROPEAN PATENT SPECIFICATION**

(45) Date of publication and mention
of the grant of the patent:
**19.03.2025  Bulletin 2025/12**

(21) Application number: **18852464.9**

(22) Date of filing: **06.07.2018**

(51) International Patent Classification (IPC):
**G02C 7/04** *(2006.01)*

(52) Cooperative Patent Classification (CPC):
**G02C 7/04;** G02C 2202/02; G02C 2202/04;
G02C 2202/24

(86) International application number:
**PCT/JP2018/025751**

(87) International publication number:
**WO 2019/044175 (07.03.2019 Gazette 2019/10)**

(54)  **OPHTHALMIC LENS**

BRILLENGLAS

LENTILLE OPHTALMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **01.09.2017  JP 2017168668**

(43) Date of publication of application:
**08.07.2020  Bulletin 2020/28**

(73) Proprietors:
  • **Seed Co., Ltd.**
    **Tokyo 113-8402 (JP)**
  • **University of Tsukuba**
    **Tsukuba-shi, Ibaraki 305-8577 (JP)**

(72) Inventors:
  • **NAKAMURA, Akira**
    **Tokyo 113-8402 (JP)**
  • **FUKUSHIMA, Tsutomu**
    **Tokyo 113-8402 (JP)**
  • **SUN, Yijie**
    **Tokyo 113-8402 (JP)**
  • **HIRAOKA, Takahiro**
    **Tsukuba-shi**
    **Ibaraki 305-8577 (JP)**

(74) Representative: **D Young & Co LLP**
    **3 Noble Street**
    **London EC2V 7BQ (GB)**

(56) References cited:
    **WO-A1-2014/050879        AU-B2- 2014 262 297
    JP-A- 2006 515 938        US-A1- 2004 156 013
    US-A1- 2015 219 926**

    • **TAKAHIRO HIRAOKA ET AL: "Influence of Ocular
      Wavefront Aberrations on Axial Length
      Elongation in Myopic Children Treated with
      Overnight Orthokeratology",
      OPHTHALMOLOGY, vol. 122, no. 1, 1 January
      2015 (2015-01-01), AMSTERDAM, NL, pages 93 -
      100, XP055580422, ISSN: 0161-6420, DOI:
      10.1016/j.ophtha.2014.07.042**
    • **HIRAOKA, TAKAHIRO ET AL.: "Influence of
      ocular wavefront aberrations on axial length
      elongation in myopic children treated with
      overnight orthokeratology", AMERICAN
      ACADEMY OF OPHTHALMOLOGY, vol. 122, no.
      1, 2015, pages 93 - 100, XP055580422, DOI:
      10.1016/j.ophtha.2014.07.042**

EP 3 677 950 B1

## Description

### Technical Field

The present invention relates to an ophthalmic lens to be worn on the eye.

### Background Art

Eyeglasses and contact lenses are used to correct myopia.

### Citation List

### Patent Literature

Patent Literature 1: Published Japanese Translation of PCT Application No. 2009-525835
Patent Literature 2: Published Japanese Translation of PCT Application No. 2008-514318
Patent Literature 3: U.S. Patent No. 6,045,578
Patent Literature 4: U.S. Patent No. 6,752,499
Patent Literature 5: WO 2014/050879 A1

### Non-Patent Literature

Non-Patent Literature 1: Investigative Ophthalmology & Visual Science, 46, (2005), pp. 3695-3972
Non-Patent Literature 2: Investigative Ophthalmology & Visual Science, 52, (2011), pp. 9362-9367
Non-Patent Literature 3: Ophthalmology, 118, (2011), pp. 1152-1161
Non-Patent Literature 4: Ophthalmology, 122, (2015), pp. 93-100

### Summary of Invention

The progression of myopia is difficult to inhibit with normal eyeglasses or contact lenses intended for correcting myopia.
It is desirable to provide an ophthalmic lens that inhibits or reduces the progression of myopia and also achieves reduced vision discomfort when worn.

### Solution to Problem

A contact lens according to one embodiment of the present invention is described in claim 1.
In the contact lens according to one embodiment of the present invention, the coma aberration and the spherical aberration are generated in predetermined amounts.
The contact lens according to one embodiment of the present invention enable formation of an image with predetermined amounts of coma aberration and spherical aberration added thereto on the retina. This makes it possible to provide an contact lens that inhibits or reduces the progression of myopia and also achieves reduced vision discomfort when worn.

### Brief Description of Drawings

[FIG. 1] FIG. 1 is an explanatory diagram schematically illustrating an example of an ideal image forming state (an image forming state of an emmetropic eye) on the retina.
[FIG. 2] FIG. 2 is an explanatory diagram schematically illustrating an example of an image forming state of a myopic eye.
[FIG. 3] FIG. 3 is an explanatory diagram schematically illustrating an example of an image forming state of an eye with myopia corrected with a monofocal contact lens.

[FIG. 4] FIG. 4 is an explanatory diagram schematically illustrating an example of an image forming state of an eye suffering the progression of myopia associated with the correction illustrated in FIG. 3.

[FIG. 5] FIG. 5 is a lens cross-sectional view of an outline of a configuration of an ophthalmic lens according to one embodiment of the present invention.

[FIG. 6] FIG. 6 is a lens cross-sectional view of a configuration example of an ophthalmic lens according to a comparative example.

[FIG. 7] FIG. 7 illustrates a QOV simulation on an ophthalmic lens according to Example 1.

[FIG. 8] FIG. 8 illustrates a QOV simulation on an ophthalmic lens according to Example 2.

[FIG. 9] FIG. 9 illustrates a QOV simulation on an ophthalmic lens according to Example 3.

[FIG. 10] FIG. 10 illustrates a QOV simulation on an ophthalmic lens according to Example 4.

[FIG. 11] FIG. 11 is an aberration diagram illustrating aberrations of the ophthalmic lens according to Example 1.

[FIG. 12] FIG. 12 is an aberration diagram illustrating aberrations of the ophthalmic lens according to Example 2.

[FIG. 13] FIG. 13 is an aberration diagram illustrating aberrations of the ophthalmic lens according to Example 3.

[FIG. 14] FIG. 14 is an aberration diagram illustrating aberrations of the ophthalmic lens according to Example 4.

**Description of Embodiments**

Some embodiments of the present invention will be described in detail below with reference to the drawings. Note that the description will be given in the following order.

0. Comparative Example

0.1. Outline of Technique to Inhibit Progression of Myopia
0.2. Problem

1. Description of Ophthalmic Lens According to One Embodiment

1.1. Outline of Configuration of Ophthalmic Lens
1.2. Details of Configuration of Ophthalmic Lens
1.3. Material and Manufacturing Method of Ophthalmic Lens
1.4. Effects

2. Numerical Examples of Lens
3. Other Embodiments

<0. Comparative Example>

[0.1. Outline of Technique to Inhibit Progression of Myopia]

Myopia is one of refractive errors and more specifically, an eye disease that causes distant objects to be focused in front of the retina, thus causing their image to appear blurred. Major known types of myopia are axial myopia occurring due to an excessively long axial length of the eye and refractive myopia occurring due to excessively strong refractive power of the cornea and crystalline lens.

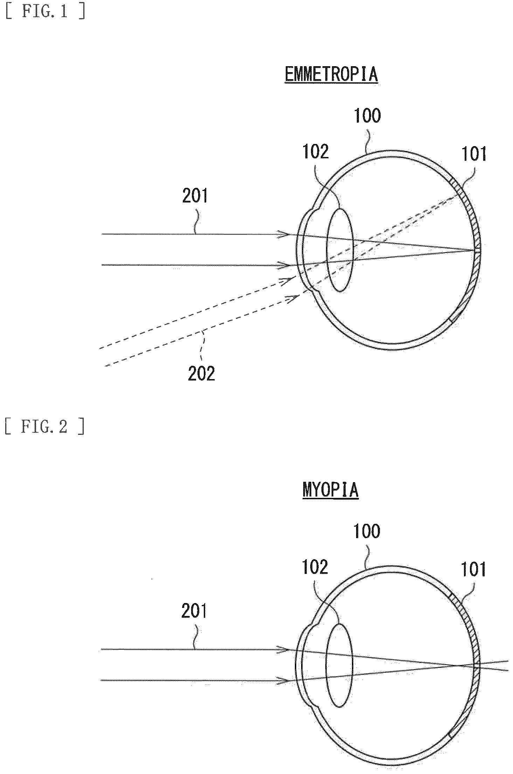

FIG. 1 schematically illustrates an example of an ideal image forming state of an eye (an image forming state of an emmetropic eye). FIG. 2 schematically illustrates an example of an image forming state of a myopic eye.

As illustrated in FIG. 1, the human eye includes an eyeball 100, a retina 101, and a crystalline lens 102 functioning as a lens for forming an image on the retina 101. Ideally, as illustrated in FIG. 1, it is desirable that both a central light flux 201 and a peripheral light flux 202 entering the eye be allowed to form an image on the retina 101 by the crystalline lens 102. In the case of myopia, as illustrated in FIG. 2, the central light flux 201 entering the eye forms an image in front of the retina 101.

The causes of myopia are broadly classified into environmental factors and genetic factors. While it is believed that the genetic factors are highly responsible for high myopia whereas the environmental factors are strong in mild myopia, there are cases where both of them are involved. It is considered that many cases of myopia development in these days are due to the environmental factors associated with increased occasions of intensive near viewing, such as the use of personal computers, gaming devices, and e-mails on mobile phones. Axial myopia due to the environmental factors may thus be today's typical type of myopia.

Although not fully understood, the progression of myopia is believed to be caused by a gradual increase in eye length. One of factors responsible for it is correction of myopic eyes by using eyeglasses or contact lenses. While eyeglasses and contact lenses are commonly used to correct myopia, the use of normal eyeglasses or contact lenses for correction causes hyperopic defocus in the peripheral region, which is considered to trigger the axial elongation of the eye. It has been suggested that the peripheral retinal (off-axis) image quality and optical properties may significantly influence the eye axis and refractive development, and the hyperopic defocus can promote the axial elongation of the eye.

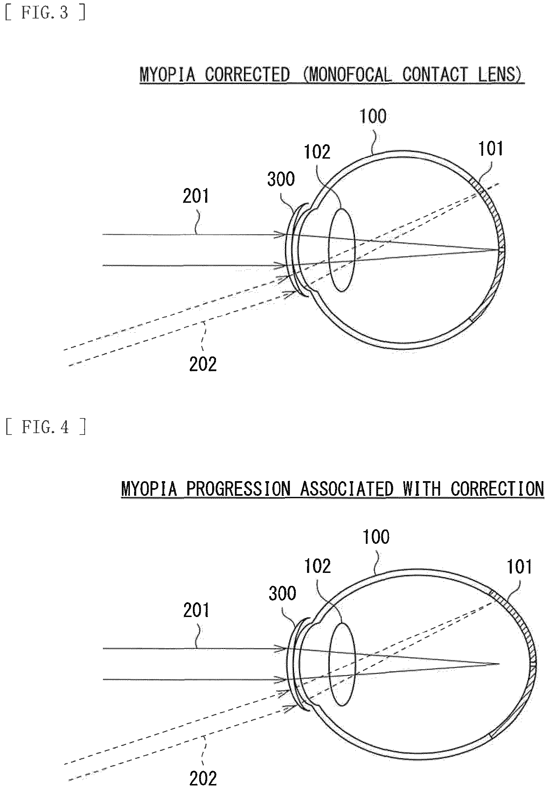

By way of example, FIG. 3 schematically illustrates an example of an image forming state of an eye with myopia corrected with a monofocal contact lens 300. FIG. 4 schematically illustrates an example of an image forming state of an eye suffering the progression of myopia associated with the correction illustrated in FIG. 3.

As illustrated in FIG. 3, if the monofocal contact lens 300 is worn, the central light flux 201 forms an image on the retina 101 whereas the peripheral light flux 202 forms an image behind the retina 101. In other words, wearing of the monofocal contact lens 300 causes a hyperopic defocus. If such a correction is performed, the eye attempting to allow the peripheral light flux 202 to form an image on the retina 101 can increase in axial length as illustrated in FIG. 4, resulting in the progression of myopia.

Various approaches have been tried in an attempt to prevent the progression of myopia. The approaches are broadly categorized into pharmaceutical approaches and optical approaches. The pharmaceutical approaches use atropine or pirenzepine. While having the strongest inhibitory effect on myopia progression, atropine is difficult to use on a long-term basis because of its strong general and local side effects, among which photophobia and blurred vision associated with mydriasis, and near vision disturbance due to cycloplegia are problematic, in particular. Pirenzepine, an M1-selective muscarinic receptor antagonist, has less effect of inducing mydriasis and cycloplegia, but disadvantageously, is also weak in inhibitory effect on myopia progression.

Examples of the optical approaches include studies on the effect of orthokeratology lenses on axial elongation of the eye during childhood. The results showed that the orthokeratology lenses had a significantly higher effect of inhibiting axial elongation of the eye as compared with monofocal eyeglasses. Although the mechanism of inhibition of myopia progression by orthokeratology still remains to be elucidated, the predominant hypothesis is that orthokeratology improves hyperopic defocus in the peripheral retina. Smith et al. demonstrated by experiment on monkey eyes that peripheral vision, that is, image quality and optical properties in the peripheral retina, not in the macula (central fovea), significantly influence the eye axis and refractive development (Non-Patent Literature 1). In other words, it was showed that the central fovea is not necessarily important but rather the off-axis (peripheral retina) elements are important to the axial length of the eye and refractive development. The so-called off-axis aberration theory indicates that even if image formation at the central fovea is improved for myopic eyes at the developmental stage by using eyeglasses or contact lenses, it is not possible to inhibit the progression of myopia.

Further, it has been reported that myopic eyes have more hyperopic off-axis refraction than non-myopic eyes, suggesting that the off-axis hyperopic defocus promotes axial elongation of the eye. While myopia correction with normal contact lenses or eyeglasses does not allow for correction of hyperopic defocus in the peripheral retina, orthokeratology causes the central cornea to become flattened and the peripheral cornea to become thicker, consequently causing the middle peripheral region to become stronger in refractive power (become more myopic). It is thus considered that after treatment with orthokeratology lenses, hyperopic defocus in the peripheral retina is improved and as a result, axial elongation of the eye is inhibited.

As a study based on the off-axis aberration theory, Sankaridurg et al. reported one-year results of studying the degree of inhibition of myopia progression by using a bifocal soft contact lens with add power in the peripheral portion of the lens in comparison with monofocal eyeglasses (Non-Patent Literature 2). According to the study report, changes in the refractive index and axial elongation of the eye in the bifocal soft contact lens wearers indicated a higher degree of inhibition of myopia progression than in the case of using the monofocal eyeglasses.

Further, as another theory different from the off-axis aberration theory, there is accommodation lag theory proposing that, in view of the objectively measured accommodation responses to a retinal image blur being slower in myopic schoolchildren than in emmetropic schoolchildren, myopia progression is attributable to an accommodation lag, more specifically, an excessive accommodation lag occurring due to large defocus to behind the retina during near viewing. On the basis of the accommodation lag theory, many clinical trials have been conducted using progressive power eyeglasses that inhibit myopia progression.

For example, Anstices et al. evaluated the degree of inhibition of myopia progression after 10-month wearing of a dual-focus (bifocal) soft contact lens with add power alternating in annular shape in comparison with a monofocal soft contact lens (Non-Patent Literature 3). Anstices et al. reported that changes in the refractive index and axial elongation of the eye in the dual-focus soft contact lens wearers demonstrated a higher inhibitory effect on myopia progression than in the case of using the monofocal soft contact lens.

Furthermore, there have been various inventions using ophthalmic lenses formed on the basis of these theories. For example, a prior patent literature by Smith et al. (Patent Literature 1) teaches a method of controlling the progression of myopia by introducing a peripheral (off-axis) myopic defocus relative to a central (on-axis), in-focus image.

A prior patent literature by To et al. (Patent Literature 2) teaches the use of a concentric multi-zone bifocal lens that generates both on-axis and peripheral myopic defocuses for visible objects at every viewing distance. The teaching has been shown to be effective in retarding the progression of myopia in both of animal experiments and human clinical trials.

Further, a prior patent literature by Collins et al. (Patent Literature 3) discloses a method of controlling myopia by manipulating spherical aberration, and teaches regulating emmetropization process by the degree and direction of spherical aberration present at the central fovea. Collins et al. propose that young myopes have higher levels of negative central spherical aberration that promotes inappropriate eye growth, and that the use of therapeutic lenses to add positive central spherical aberration will thus inhibit excessive axial growth of the eye and the progression of myopia.

Moreover, a prior patent literature by Aller et al. (Patent Literature 4) teaches controlling myopia in young myopic patients who also exhibit near point esophoria and accommodation lag by prescribing commercially available bifocal contact lenses to them.

[0.2. Problem]

However, the prior patent literature by Smith et al. (Patent Literature 1) teaches projecting no defocus onto the central retina to provide clear corrected vision. The method of Smith et al. can thus fail to achieve an optimum effect of retarding the progression of myopia.

The use of the bifocal lens in the method described in the prior patent literature by To et al. (Patent Literature 2) causes projection of a single secondary, homogenous defocused image. This image can be perceived as a bright ghost image causing patients' discomfort, however. Furthermore, the use of the bifocal lens can cause the patients to adjust their accommodation habit to focus the secondary, homogenous defocused image and thereby develop erroneous accommodation capability of selecting such an image instead of the primary image.

Regarding the method in the prior patent literature by Collins et al. (Patent Literature 3), intentionally introducing strong spherical aberration into the central image leads to degradation in the image and the visual acuity, and can thus be undesirable for an ophthalmic lens aimed at inhibiting myopia progression.

The method disclosed in the prior patent literature by Aller et al. (Patent Literature 4) causes at least one out-of-focus on-axis image to be present at all times on the central retina. This is expected to cause degradation in image quality during both near and distant viewing, thus being undesirable. Furthermore, when the wearer of the lens is viewing a near object by using only the near viewing zone of the lens, the distant viewing zone creates an out-of-focus image. Since the out-of-focus image comes into focus behind the peripheral region of the retina, further progression of myopia can be caused.

As described above, while there have been many reports on approaches to inhibition of myopia progression, the mechanisms of inhibition have not been fully elucidated.

Thus, the inventors of the present application analyzed one-year study results on the relationship between various optical parameters and axial elongation in orthokeratology-treated eyes, and confirmed by multivariate analysis that the most relevant factor to axial elongation of the eye is the amount of change of comma aberration.

On the basis of the theory that orthokeratology-induced improvement in hyperopic defocus at the peripheral retina has an advantageous effect on inhibition of myopia progression, refraction at the peripheral retina shifts to myopic state over the entire periphery and therefore spherical aberration, which is a point-symmetric component, would play an important role in inhibiting myopia progression. On the other hand, the results of the study conducted by the inventors of the present application indicated that cases with greater increase in coma aberration (asymmetric component) as well as spherical aberration experienced a stronger inhibitory effect on myopia progression, thus suggesting a mechanism different from the prior hypotheses by which the effect of inhibiting myopia progression is exhibited. More specifically, the inventors of the present application found a new mechanism that coma aberration increases the amount of pseudo-accommodation and, in eyes treated with orthokeratology, increased corneal multifocality and pseudo-accommodation reduce load on the ciliary muscle, resulting in advantageous effect in inhibiting myopia progression (Non-Patent Literature 4).

To verify the above-described findings, the inventors of the present application decided to produce an ophthalmic lens designed to intentionally add coma aberration. However, intentionally introducing coma aberration only is not preferable since it leads to degradation in the image and the visual acuity.

Development of an ophthalmic lens is thus desired that has a sufficient amount of aberration for inhibiting or reducing axial elongation of the eye in its optical surface, and yet provides reduced vision discomfort when worn.

<1. Description of Ophthalmic Lens According to One Embodiment>

[1.1. Outline of Configuration of Ophthalmic Lens]

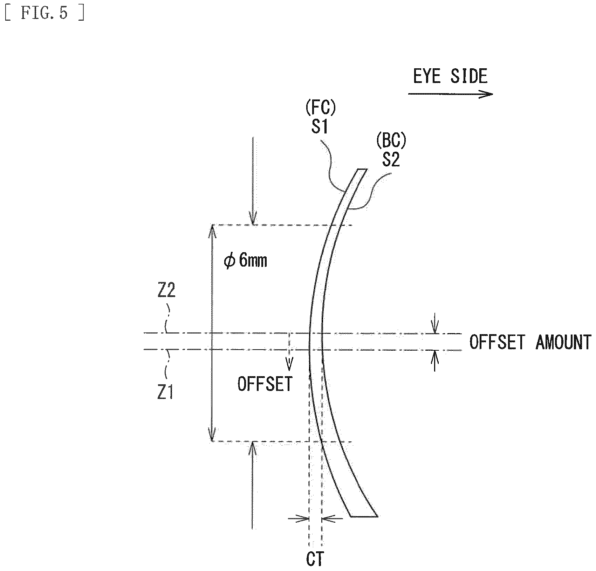

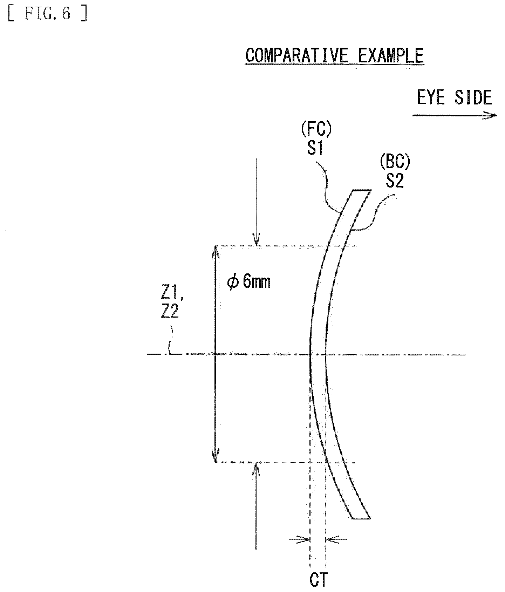

FIG. 5 illustrates an outline of a configuration of an ophthalmic lens according to one embodiment of the present invention. FIG. 6 illustrates a configuration example of an ophthalmic lens according to a comparative example.

The ophthalmic lens according to the present embodiment is used to inhibit the progression of myopia and, by being worn on the eye, forms an image with a coma aberration and a spherical aberration added thereto on the retina.

The ophthalmic lens according to the present embodiment is configured to generate the coma aberration and the spherical aberration. The ophthalmic lens according to the present embodiment is configured so that a combined amount of the coma aberration and the spherical aberration calculated with a Zernike polynomial in an effective optical region of 6 mm is 0.3 μm or more and not more than 2.0 μm. Since human eyes typically have a maximum pupil diameter of 6 mm, the ophthalmic lens according to the present embodiment has an effective optical region of 6 mm.

In the ophthalmic lens according to the present embodiment, preferably, the coma aberration is in an amount of 0.01 μm or more and not more than 0.81 μm and the spherical aberration is in an amount of 0.01 μm or more and not more than 1.99 μm under the condition that the combined amount of the coma aberration and the spherical aberration is 0.3 μm or more and not more than 2.0 μm.

As illustrated in FIG. 5, the ophthalmic lens according to the present embodiment includes a lens front surface S1 of a convex shape, and a lens back surface S2 of a concave shape which is to be disposed on the eye side.

The lens front surface S1 preferably has an aspherical shape that generates the spherical aberration. Further, the lens front surface S1 has an optical central axis Z1 that is preferably offset in position by a predetermined offset amount with respect to an optical central axis Z2 of the lens back surface S2 to generate the coma aberration. As a comparative example, FIG. 6 illustrates a configuration example in which the optical central axis Z1 of the lens front surface S1 and the optical central axis Z2 of the lens back surface S2 coincide with each other.

The aforementioned predetermined offset amount preferably has an absolute value of 0.1 mm or more and not more than 0.5 mm.

It should be noted that the present embodiment and Examples to be presented later will be described with reference to a case where only the lens front surface S1 has an aspherical shape; however, only the lens back surface S2 may have an aspherical shape. Alternatively, both of the lens front surface S1 and the lens back surface S2 may have an aspherical shape. Further, while the present embodiment and Examples to be presented later will be described with reference to a case where the optical central axis Z1 of the lens front surface S1 is offset with respect to the optical central axis Z2 of the lens back surface S2, a configuration where the optical central axis Z2 of the lens back surface S2 is offset with respect to the optical central axis Z1 of the lens front surface S1 is also possible.

[1.2. Details of Configuration of Ophthalmic Lens]

The degree of myopia progression in Japanese myopes is reported to be 0.5 D (diopter) to 1.0 D per year, and a continuous follow-up for at least two years is required to determine whether the myopia progression is inhibited or not. The inventors of the present application thus used a degree of myopia progression of less than 1.0 D after two-year continuous wearing of the ophthalmic lens according to the present embodiment as an indicator of the myopia progression being inhibited or reduced.

According to the report made by the inventors of the present application in the Non-Patent Literature 4, a correlation between an intentionally added aberration amount and the degree of myopia progression indicates that the amount of aberration needed to achieve a degree of myopia progression of less than 1.0 D after a two-year follow-up is 0.3 μm or more. On the other hand, adding aberration to the effective optical region of the ophthalmic lens results in lower quality of view (QOV) to cause difficulty in daily life, and further, in continuous wearing.

Since the present embodiment aims at providing an ophthalmic lens that achieves inhibition or reduction of myopia progression while achieving QOV, the amount of aberration to be added should be limited to a range that allows a certain level of QOV to be achieved in vision simulations.

Thus, in the present embodiment, logMAR Landolt ring simulation was employed to determine the presence of a certain level of QOV. Cases where the gaps of Landolt rings at 0.4 logMAR were identifiable over a range of 1.25 D were determined as achieving sufficient QOV. Since the depth of focus of the ophthalmic lens according to the present embodiment preferably extends to the negative side, the aforementioned 1.25 D range preferably includes a wider range of negative values. According to the foregoing simulation, the upper limit to the aberration amount is 2.0 μm for the gaps of Landolt rings at 0.4 logMAR to be identifiable over the range of 1.25 D.

It is thus preferable that the aberration amount to be added to the optical surface of the ophthalmic lens according to the present embodiment be 0.3 μm or more and not more than 2.0 μm. This aberration amount in the ophthalmic lens according to the present embodiment is characterized by being designed on the basis of the combined total of coma aberration and spherical aberration, and the degree of addition of each of coma aberration and spherical aberration significantly impacts the inhibitory effect on myopia progression and, in particular, QOV. Since the degree of addition of coma aberration is stronger in impact, the amount of coma aberration to be added to the ophthalmic lens according to the present embodiment is preferably 0.81 μm or less.

Specifically, in the ophthalmic lens according to the present embodiment, it is preferable that coma aberration be added in an amount of 0.01 μm or more and not more than 0.81 μm, and spherical aberration be added in an amount of 0.01 μm or more and not more than 1.99 μm.

[1.3. Material and Manufacturing Method of Ophthalmic Lens]

[Material of Ophthalmic Lens]

The ophthalmic lens according to the present embodiment preferably includes a hydrogel. Examples of the hydrogel include a hydrogel manufactured by using a hydrophilic monomer, and a hydrogel manufactured by adding either a hydrophobic monomer or a crosslinking monomer, or both, to a hydrophilic monomer.

The hydrophilic monomer contributes to an increase in water content of the hydrogel. The hydrophobic monomer has an effect of adjusting the water content and swelling ratio of the hydrogel and furthermore, can influence the sustained release performance for a drug contained, if any. The crosslinking monomer is able to control, by its content, the density of polymer chains of the hydrogel. By controlling the crosslink density, the crosslinking monomer makes it possible to inhibit drug diffusion, delay the release of the contained drug, and control the rate of release of the drug. Furthermore, the crosslinking monomer is able to impart mechanical strength, shape stability, and solvent resistance to the hydrogel, as well as to control the rate of release of the drug.

The water content of the hydrogel (water content (wt%) = [(W - D) / W] × 100 (W: wet weight; D: dry weight)) is not specifically limited as long as it is similar to the water content of a commercially available hydrogel contact lens, and may be 30 wt% to 70 wt%, for example.

The hydrophilic monomer preferably contains one or more hydrophilic groups in its molecule. Examples of such a hydrophilic monomer include 2-hydroxyethyl (meth)acrylate, 2-hydroxymethyl (meth)acrylate, hydroxypropyl (meth) acrylate, glycerol (meth)acrylate, acrylamide, N,N-dimethyl (meth)acrylamide, N,N-diethyl (meth)acrylamide, N-vinylpyrrolidone, diacetone acrylamide, N-vinyl acetamide, (meth)acrylic acid, (meth)acryloxyethylsuccinic acid, itaconic acid, methacrylamidopropyl triammonium chloride, and 2,3-dihydroxypropyl (meth)acrylate. Two or more of these hydrophilic monomers may be used in combination. Among the above-listed hydrophilic monomers, 2-hydroxyethyl (meth)acrylate is preferable. The hydrophilic monomer content is not specifically limited; however, in view of its impact on the hydrous property of the resultant ophthalmic lens, the hydrophilic monomer content is preferably 50 wt% or more of the total of the polymerizable components. If the hydrophilic monomer content is less than 50 wt%, it becomes difficult to impart sufficient hydrous property to the ophthalmic lens, which results in lower flexibility of the ophthalmic lens. A hydrophilic monomer content of less than 50 wt% is thus not preferable.

Examples of the hydrophobic monomer include siloxanyl (meth)acrylate, trifluoroethyl (meth)acrylate, methacrylamide, cyclohexyl (meth)acrylate, and n-butyl (meth)acrylate. Two or more of the listed hydrophobic monomers may be used in combination. Varying the hydrophobic monomer content makes it possible to vary the hydrous property of the ophthalmic lens to be obtained. A high hydrophobic monomer content, however, significantly reduces the hydrous property to cause the resultant ophthalmic lens to be low in flexibility. The hydrophobic monomer content is thus preferably less than 30 wt% of the total amount of the monomers, for example.

Examples of the crosslinking monomer include ethyleneglycol di(meth)acrylate, methylene bis-acrylamide, 2-hydroxy-1,3-dimethacryloxypropane, and trimethylolpropane triacrylate. Two or more of them may be used in combination.

From the viewpoint of an effect of adjusting the shape of the ophthalmic lens to be obtained, the crosslinking monomer content is preferably 0.1 wt% to 10 wt% of the total amount of the monomers. If the crosslinking monomer content is less than 0.1 wt%, the ophthalmic lens becomes insufficient in network structure. If the crosslinking monomer content exceeds 10 wt%, the network structure becomes excessive to cause the ophthalmic lens to be fragile and low in flexibility.

Examples of a polymerization initiator for use in polymerizing a mixture of the foregoing monomers include typical radical polymerization initiators such as peroxides including lauroyl peroxide, cumene hydroperoxide and benzoyl peroxide, azobisvaleronitrile, or azobisisobutyronitrile. The polymerization initiator is preferably added in an amount of about 10 ppm to about 3500 ppm of the total amount of the monomers.

The ophthalmic lens according to the present embodiment may contain a UV absorber. Specific examples of the UV absorber include 2-hydroxy-4-(meth)acryloyloxybenzophenone, 2-hydroxy-4-(meth)acryloyloxy-5-t-butylbenzophenone, 2-(2'-hydroxy-5'-(meth)acryloyloxyethylphenyl)-2H-benzotriazole, 2-(2'-hydroxy-5'-(meth)acryloyloxyethylphenyl)-5-chloro-2H-benzotriazole, and 2-hydroxy-4-metacryloyloxymethyl phenylbenzoate. It is sufficient that the UV absorber is added in a desired amount on the basis of a desired UV absorbance.

[Manufacturing Method of Ophthalmic Lens]

The ophthalmic lens according to the present embodiment may be manufactured by previously known methods such as, and not limited to, cast molding or lathe cutting. Cast molding is a process where polymerization reaction is carried out in a mold that is designed in advance to provide the polymerized material with a desired shape to obtain the ophthalmic lens. Lathe cutting is a process where a block-shaped polymer is initially obtained and then the block is subjected to cutting, polishing and other processing into the ophthalmic lens shape.

(Manufacturing by Cast Molding)

First, to a hydrophilic monomer or a monomer mixture of a hydrophilic monomer and an addition of either a hydrophobic monomer or a crosslinking monomer, or both, a polymerization initiator is added and dissolved therein by stirring to give a liquid monomer mixture.

The obtained liquid monomer mixture is poured into a mold of metal, glass, plastic, or other material. The mold is then sealed and subjected to stepwise or continuous heating at temperatures in a range of 25°C to 130°C in a constant temperature bath or the like to allow polymerization to complete in five to 120 hours. UV light, electron beams, gamma rays, etc. may also be used for polymerization. Alternatively, solution polymerization may be employed where water or an organic solvent is added to the foregoing liquid monomer mixture.

After completion of polymerization, cooling is performed to room temperature. The obtained polymer is then removed from the mold and subjected to cutting and polishing as necessary. The resulting device (i.e., an annular device) is subjected to hydration and swelling into a hydrous gel (i.e., a hydrogel). Examples of liquid usable in hydration and swelling (i.e., a swelling liquid) include water, saline, and an isotonic buffer solution, each of which may be used in the form of a mixture with a water-soluble organic solvent. The swelling liquid is heated to 40°C to 100°C, and the obtained device is soaked therein for a certain period of time to be thereby quickly brought into a hydrated, swollen state. The swelling process also enables removal of unreacted monomers contained in the polymer.

(Manufacturing by Lathe Cutting)

First, a block-shaped polymer is obtained in a manner similar to cast molding by using a mold that is designed to provide a polymer in the shape of a block. Then, the obtained block is cut into the ophthalmic lens.

[1.4. Effects]

The ophthalmic lens according to the present embodiment enables formation of an image with predetermined amounts of coma aberration and spherical aberration added thereto on the retina. This makes it possible to provide an ophthalmic lens that inhibits or reduces the progression of myopia and also achieves reduced vision discomfort when worn.

The ophthalmic lens according to the present embodiment inhibits or reduces axial elongation of the eye, thus inhibiting or reducing the progression of myopia. The ophthalmic lens according to the present embodiment is designed to have an optical surface to which coma aberration sufficient for inhibiting axial elongation of the eye is intentionally added, and to which spherical aberration is also added together. The ophthalmic lens according to the present embodiment thus divides the overall aberration amount to be added between two different aberration components, thereby making the respective aberration amounts smaller to enable reduction in imbalance between the aberration components. This makes it possible to provide high visibility and less vision discomfort when the ophthalmic lens is worn.

**Examples**

<2. Numerical Examples of Lens>

[Method of Fabricating Ophthalmic Lenses of Examples]

Ninety-nine grams of 2-hydroxyethyl methacrylate as the hydrophilic monomer, 1 g of ethylene glycol dimethacrylate as the crosslinking monomer, and 0.15 g of 2,2'-azobisisobutyronitrile as the polymerization initiator were mixed together, and the mixture was subjected to thermal polymerization (by heating for 40 hours from room temperature to 100°C under a nitrogen atmosphere) in molds designed to yield structures with values as illustrated in [Table 1] after polymerization and swelling. The polymerized devices were soaked in saline and heated at 60°C for 30 minutes to be swollen, and then autoclaved to obtain ophthalmic lenses.

[Table 1]

| | BC | CT | Power | Zernike ($\phi$6) | |
|---|---|---|---|---|---|
| | | | | Coma aberration amount | Spherical aberration amount |
| Example 1 | 8.80 | 0.21 | -1.50 | 0.10 | 0.30 |
| Example 2 | 8.80 | 0.21 | -1.75 | 0.40 | 0.90 |
| Example 3 | 8.80 | 0.20 | -2.00 | 0.60 | 1.30 |

(continued)

| | BC | CT | Power | Zernike ($\phi$6) | |
|---|---|---|---|---|---|
| | | | | Coma aberration amount | Spherical aberration amount |
| Example 4 | 8.80 | 0.20 | -2.25 | 0.80 | 1.80 |

Measurements of the optical design and vision simulations were carried out for the obtained ophthalmic lenses of Examples 1 to 4 in accordance with the following. The results are illustrated in [Table 2].

[Table 2]

| | FC | | | Power | BC | CT | Refractive index | Abbe number | Zernike ($\phi6$) | | |
|---|---|---|---|---|---|---|---|---|---|---|---|
| | Radius of curvature | Conic | Offset | | | | | | Coma aberration amount | Spherical aberration amount | Overall aberration amount |
| Example 1 | 9.16 | 0.43 | -0.05 | -1.50 | 8.80 | 0.21 | 1.402 | 56.30 | 0.101 | 0.301 | 0.318 |
| Example 2 | 9.21 | 1.09 | -0.12 | -1.75 | 8.80 | 0.21 | 1.402 | 56.30 | 0.405 | 0.904 | 0.991 |
| Example 3 | 9.27 | 1.51 | -0.14 | -2.00 | 8.80 | 0.20 | 1.402 | 56.30 | 0.601 | 1.302 | 1.434 |
| Example 4 | 9.32 | 2.00 | -0.15 | -2.25 | 8.80 | 0.20 | 1.402 | 56.30 | 0.805 | 1.804 | 1.975 |

the thickness (CT) of each ophthalmic lens was measured using a dial thickness gauge (G-1A manufactured by Ozaki Mfg. Co., Ltd.); the outer diameter, front curve (FC), base curve (BC), and power of each ophthalmic lens were measured using an analyzer (model JCF manufactured by Optimec Limited); and the radius of curvature, conic coefficient, and offset amount were measured using analysis software.

As illustrated in FIG. 5, the front curve (FC) represents the shape of the lens front surface S1, and the base curve (BC) represents the shape of the lens back surface S2.

The lens front surface S1 has an aspherical shape. The aspherical shape is defined by the following aspherical surface expression. In the following aspherical surface expression, Z represents the depth of the aspherical surface, and h represents the height from the optical central axis (i.e., the radius) of the lens. Further, r is the paraxial radius of curvature, and k is the conic coefficient. A, B, and C represent higher-order aspherical coefficients. In each of the Examples in [Table 2], the higher-order aspherical coefficients are zero in value and thus omitted from the table.

(Aspherical Surface Expression)

[Mathematical 1]

$$Z = \frac{h^2/r}{1+\sqrt{1-\frac{(1+k)h^2}{r^2}}} + Ah^4 + Bh^6 + Ch^8 + \cdots$$

The Zernike polynomial is represented by the following expressions. The following expressions represent a standard Zernike polynomial. In the following standard Zernike polynomial, the coefficient when $n = 3$ and $m = 2$ represents coma aberration of the y component. The coefficient when $n = 4$ and $m = 2$ represents spherical aberration. The spherical aberration amount and the coma aberration amount in [Table 1] and [Table 2] correspond to those coefficients. In the standard Zernike polynomial, the coordinates where a light beam passes through the pupil of the optical system are expressed as x, y, and the wavefront aberration is expressed as W(x, y). Further, the wavefront aberration in a case where the coordinates (x, y) are converted into polar coordinates $(\rho, \theta)$ is expressed as $W(\rho, \theta)$. Anm represents a standard Zernike coefficient.

(Standard Zernike Polynomial)

[Mathematical 2]

$$W(x,y) = W(\rho\sin\theta, \rho\cos\theta) = W(\rho, \theta)$$

$$= \sum_{n=0}^{k}\sum_{m=0}^{n} A_{nm} \cdot R_n^{n-2m}(\rho) \cdot \begin{cases} \cos|n-2m|\theta & : n-2m \geq 0 \\ \sin|n-2m|\theta & : n-2m < 0 \end{cases}$$

$$R_n^{n-2m}(\rho) = \sum_{s=0}^{m}(-1)^s \frac{(n-s)! \; \rho^{n-2s}}{s! \; (m-s)! \; (n-m-s)!}$$

In [Table 2], the overall aberration amount refers to a combined amount of the coma aberration amount and the spherical aberration amount. The combined amount of the aberrations here is represented by the following expression:

$$(\text{Combined amount of the aberrations}) = (A^2 + B^2)^{1/2}$$

where A represents the coma aberration amount, and B represents the spherical aberration amount.

[Optical Simulations]

(QOV Simulation)

The vision simulations on the ophthalmic lenses were carried out using simulation software, Multifocal Simulator.

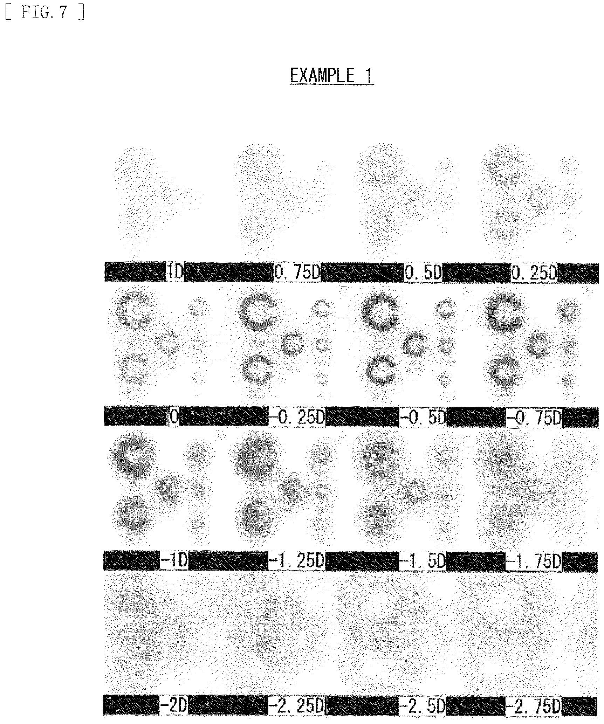

FIG. 7 illustrates a QOV simulation on the ophthalmic lens according to Example 1. FIG. 7 corresponds to a retinal image in a case where the ophthalmic lens according to Example 1 is worn. The simulation in FIG. 7 is a QOV simulation with logMAR Landolt rings for a case with a pupil diameter of 6.0 mm, a coma aberration amount of 0.101 $\mu$m, a spherical aberration amount of 0.301 $\mu$m, and a combined amount of the aberrations of 0.318 $\mu$m.

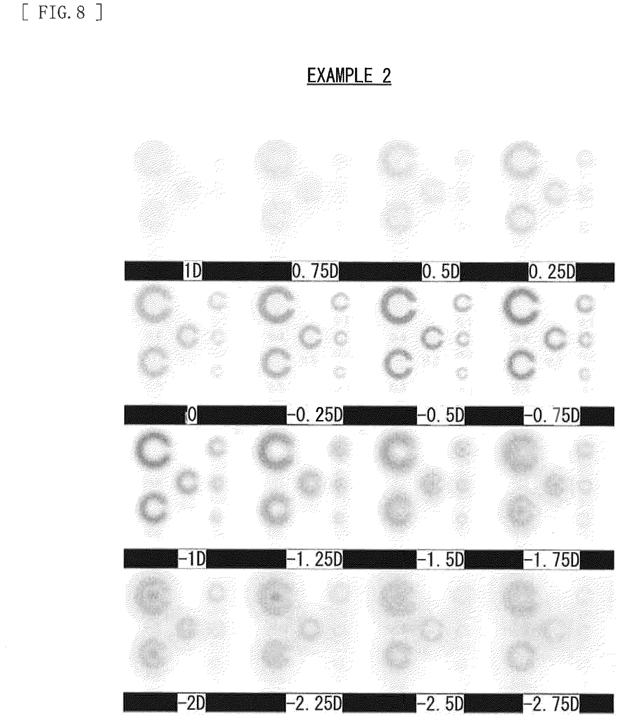

FIG. 8 illustrates a QOV simulation on the ophthalmic lens according to Example 2. FIG. 8 corresponds to a retinal image in a case where the ophthalmic lens according to Example 2 is worn. The simulation in FIG. 8 is a QOV simulation with logMAR Landolt rings for a case with a pupil diameter of 6.0 mm, a coma aberration amount of 0.405 $\mu$m, a spherical aberration amount of 0.904 $\mu$m, and a combined amount of the aberrations of 0.991 $\mu$m.

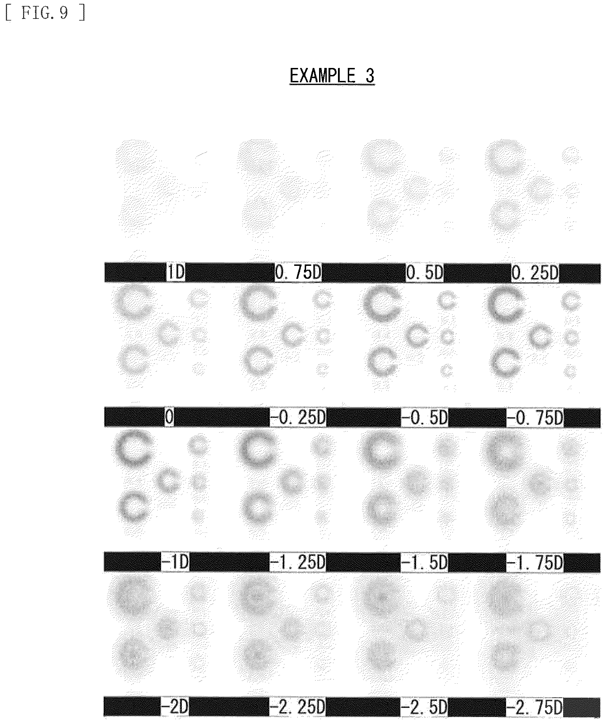

FIG. 9 illustrates a QOV simulation on the ophthalmic lens according to Example 3. FIG. 9 corresponds to a retinal image in a case where the ophthalmic lens according to Example 3 is worn. The simulation in FIG. 9 is a QOV simulation with logMAR Landolt rings for a case with a pupil diameter of 6.0 mm, a coma aberration amount of 0.601 $\mu$m, a spherical aberration amount of 1.302 $\mu$m, and a combined amount of the aberrations of 1.434 $\mu$m.

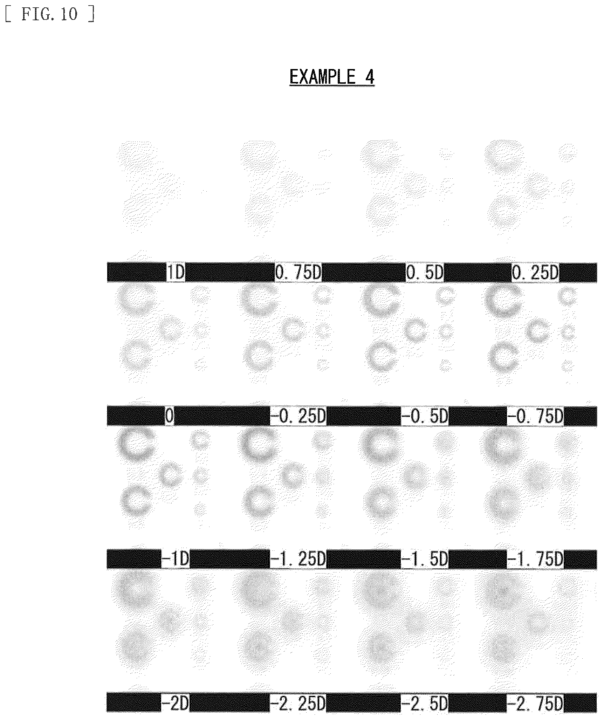

FIG. 10 illustrates a QOV simulation on the ophthalmic lens according to Example 4. FIG. 10 corresponds to a retinal image in a case where the ophthalmic lens according to Example 4 is worn. The simulation in FIG. 10 is a QOV simulation with logMAR Landolt rings for a case with a pupil diameter of 6.0 mm, a coma aberration amount of 0.805 $\mu$m, a spherical aberration amount of 1.804 $\mu$m, and a combined amount of the aberrations of 1.975 $\mu$m.

The simulation results in FIG. 7 to FIG. 10 indicate that each of the Examples allowed the logMAR Landolt rings to be identifiable over a range of approximately 1.25 D, thus providing sufficient QOV.

(Simulation of Aberration)

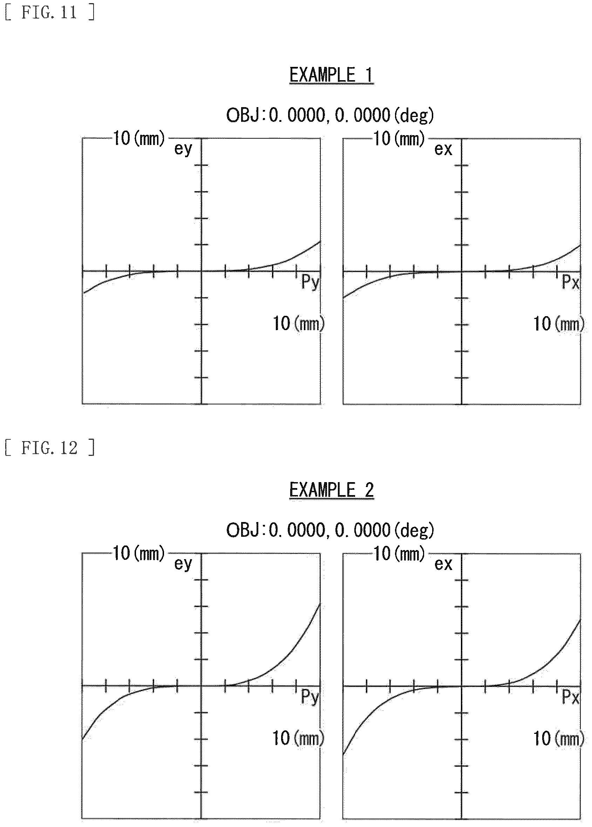

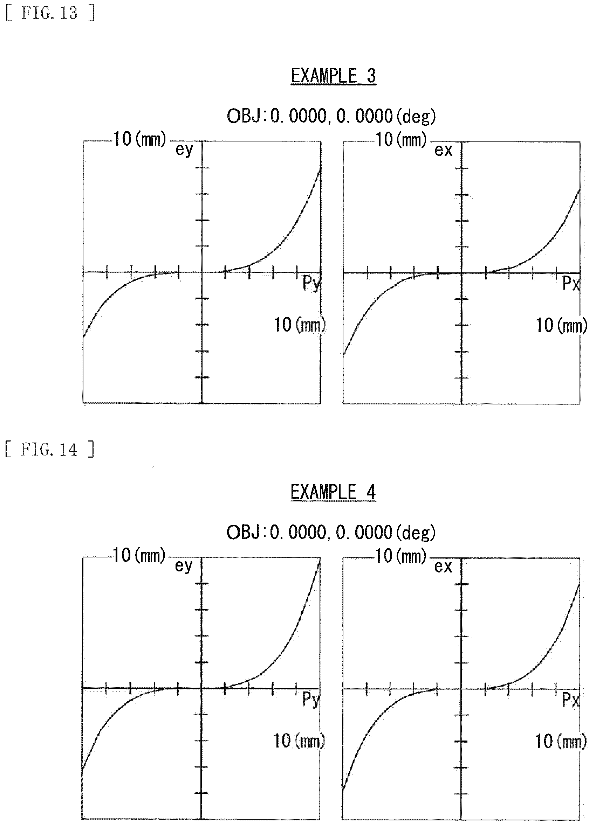

FIGs. 11 to 14 illustrate lateral aberrations of the ophthalmic lenses according to the respective Examples. Each of FIGs. 11 to 14 illustrates the lateral aberration in a tangential direction (y direction) and that in a sagittal direction (x direction). In each of FIGs. 11 to 14, the illustrated lateral aberrations are lateral aberrations on axis (i.e., at an angle of view of 0 degrees). In each of FIGs. 11 to 14, the horizontal axis represents the entrance pupil position, and the vertical axis represents the aberration.

<3. Other Embodiments>

The technique according to the present invention is not limited to the foregoing embodiments and the descriptions of Examples. It is possible to carry out the technique according to the present invention in various modifications.

For example, the shapes of the parts and the numerical values described or shown in the foregoing numerical examples are only illustrative for concreteness to carry out the present invention, and should not be construed as limiting the technical scope of the present invention.

This application is based upon and claims priority from Japanese Patent Application No. 2017-168668 filed with the Japan Patent Office on September 1, 2017.

It should be understood that while various modifications, combinations, sub-combinations, and alterations may occur to those skilled in the art depending on design requirements and other factors, they are deemed to be within the scope of the appended claims.

**Claims**

**1.** A contact lens configured to generate a coma aberration and a spherical aberration and having a lens front surface (S1) of a convex shape that has an aspherical shape that generates the spherical aberration and has an optical central axis (Z1) that is offset in position by a predetermined offset amount with respect to an optical central axis (Z2) of the lens back surface (S2) to generate the coma aberration; and

a lens back surface (S2) of a concave shape which is to be disposed on an eye side,
a combined amount of the coma aberration and the spherical aberration calculated with a Zernike polynomial in a circular region having a diameter of 6 mm being 0.3 $\mu$m or more and not more than 2.0 $\mu$m wherein the combined amount of the coma aberration and the spherical aberration is represented by $(A^2+B^2)^{1/2}$ where A represents the coma aberration amount, and B represents the spherical aberration amount.

2. The contact lens according to claim 1, wherein the coma aberration is in an amount of 0.01 $\mu$m or more and not more than 0.81 $\mu$m, and the spherical aberration is in an amount of 0.01 $\mu$m or more and not more than 1.99 $\mu$m.

3. The contact lens according to claim 1, wherein the predetermined offset amount has an absolute value of 0.1 mm or more and not more than 0.5 mm.

**Patentansprüche**

1. Kontaktlinse, die zum Erzeugen einer Koma-Aberration und einer sphärischen Aberration ausgestaltet ist und aufweist: eine vordere Linsenfläche (S1) mit einer konvexen Form, die eine asphärische Form aufweist, die die sphärische Aberration erzeugt, und eine optische Mittelachse (Z1) aufweist, die in ihrer Position um einen vorbestimmten Versatzbetrag in Bezug auf eine optische Mittelachse (Z2) der rückwärtigen Linsenfläche (S2) versetzt ist, um die Koma-Aberration zu erzeugen; und

   eine rückwärtige Linsenfläche (S2) mit einer konkaven Form, die auf einer Augenseite anzuordnen ist, einen kombinierten Betrag der Koma-Aberration und der sphärischen Aberration, berechnet mit einem Zernike-Polynom in einer kreisförmigen Region mit einem Durchmesser von 6 mm, der 0,3 $\mu$m oder mehr und nicht mehr als 2,0 $\mu$m beträgt, wobei der kombinierte Betrag der Koma-Aberration und der sphärischen Aberration durch $(A^2+B^2)^{1/2}$ repräsentiert wird, wobei A den Koma-Aberrationsbetrag repräsentiert und B den sphärischen Aberrationsbetrag repräsentiert.

2. Kontaktlinse nach Anspruch 1, wobei die Koma-Aberration in einem Betrag von 0,01 $\mu$m oder mehr und nicht mehr als 0,81 $\mu$m vorliegt und die sphärische Aberration in einem Betrag von 0,01 $\mu$m oder mehr und nicht mehr als 1,99 $\mu$m vorliegt.

3. Kontaktlinse nach Anspruch 1, wobei der vorbestimmte Versatzbetrag einen Absolutwert von 0,1 mm oder mehr und nicht mehr als 0,5 mm aufweist.

**Revendications**

1. Lentille de contact configurée pour générer une aberration de coma et une aberration sphérique et ayant une surface avant de lentille (S1) d'une forme convexe qui a une forme asphérique qui génère l'aberration sphérique et a un axe central optique (Z1) qui est décalé en position d'une quantité de décalage prédéterminée par rapport à un axe central optique (Z2) de la surface arrière de lentille (S2) pour générer l'aberration de coma ; et

   une surface arrière de lentille (S2) d'une forme concave qui doit être disposée d'un côté de l'œil, une quantité combinée de l'aberration de coma et de l'aberration sphérique calculée avec un polynôme de Zernike dans une région circulaire ayant un diamètre de 6 mm étant supérieure ou égale à 0,3 $\mu$m et inférieure ou égale à 2,0 $\mu$m, la quantité combinée de l'aberration de coma et de l'aberration sphérique étant représentée par $(A^2+B^2)^{1/2}$ où A représente la quantité d'aberration de coma, et B représente la quantité d'aberration sphérique.

2. Lentille de contact selon la revendication 1, l'aberration de coma étant d'une quantité supérieure ou égale à 0,01 $\mu$m et inférieure ou égale à 0,81 $\mu$m, et l'aberration sphérique étant d'une quantité supérieure ou égale à 0,01 $\mu$m et inférieure ou égale à 1,99 $\mu$m.

3. Lentille de contact selon la revendication 1, la quantité de décalage prédéterminée ayant une valeur absolue supérieure ou égale à 0,1 mm et inférieure ou égale à 0,5 mm.

[ FIG. 1 ]

EMMETROPIA

[ FIG. 2 ]

MYOPIA

[ FIG. 3 ]

MYOPIA CORRECTED (MONOFOCAL CONTACT LENS)

[ FIG. 4 ]

MYOPIA PROGRESSION ASSOCIATED WITH CORRECTION

[ FIG.5 ]

EYE SIDE →

(FC)
S1

(BC)
S2

$\phi$ 6mm

Z2

OFFSET AMOUNT

OFFSET

Z1

CT

[ FIG. 6 ]

## COMPARATIVE EXAMPLE

EYE SIDE →

(FC)
S1

(BC)
S2

φ 6mm

Z1,
Z2

CT

[ FIG. 7 ]

## EXAMPLE 1

[ FIG. 8 ]

EXAMPLE 2

[ FIG. 9 ]

EXAMPLE 3

[ FIG. 10 ]

EXAMPLE 4

[ FIG. 11 ]

## EXAMPLE 1

### OBJ : 0. 0000, 0. 0000 (deg)

[ FIG. 12 ]

## EXAMPLE 2

### OBJ : 0. 0000, 0. 0000 (deg)

[ FIG. 13 ]

## EXAMPLE 3

### OBJ:0.0000, 0.0000 (deg)

[ FIG. 14 ]

## EXAMPLE 4

### OBJ:0.0000, 0.0000 (deg)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009525835 W
- JP 2008514318 W
- US 6045578 A
- US 6752499 B
- WO 2014050879 A1
- JP 2017168668 A

**Non-patent literature cited in the description**

- *Investigative Ophthalmology & Visual Science*, 2005, vol. 46, 3695-3972
- *Investigative Ophthalmology & Visual Science*, 2011, vol. 52, 9362-9367
- *Ophthalmology*, 2011, vol. 118, 1152-1161
- *Ophthalmology*, 2015, vol. 122, 93-100